Europäisches Patentamt

European Patent Office

Office européen des brevets

(11) Veröffentlichungsnummer: **0 380 193**
**A2**

# EUROPÄISCHE PATENTANMELDUNG

(21) Anmeldenummer: **90250021.4**

(22) Anmeldetag: **26.01.90**

(51) Int. Cl.⁵: **C05G 3/00**

(30) Priorität: **27.01.89 DE 3902848**

(43) Veröffentlichungstag der Anmeldung:
**01.08.90 Patentblatt 90/31**

(84) Benannte Vertragsstaaten:
**AT BE CH DE DK ES FR GB GR IT LI LU NL SE**

(71) Anmelder: **AGLUKON SPEZIALDÜNGER GMBH**
**Heerdter Landstrasse 199**
**D-4000 Dusseldorf 11(DE)**

(72) Erfinder: **Bürger, Horst, Dr.**
**In der Schindskaule 9**
**D-5000 Köln 90(DE)**
Erfinder: **Jaschkowitz, Michael**
**Buchenstrasse 20a**
**D-4154 Tönisvorst 1(DE)**
Erfinder: **Klepzig, Hans-Paul**
**Hünefeldstrasse 83**
**D-5600 Wuppertal 2(DE)**
Erfinder: **Kloth, Bernhard, Dr.**
**Schirmerstrasse 29**
**D-5000 Köln 30(DE)**
Erfinder: **Kohl, Wilhelm, Dr.**
**Neusser Strasse 74**
**D-4047 Dormagen 11(DE)**

(54) **Formkörper zur Ernährung von Pflanzenkulturen und Verfahren zu ihrer Herstellung.**

(57) Es werden Formkörper, die alle für eine optimale Ernährung von Pflanzenkulturen notwendigen Nährstoffe, Wirkstoffe, Pflanzenbehandlungsmittel und Hilfsstoffe enthalten und deren Partikel über Stoffbrücken agglomeriert sind, beschrieben.

Die Herstellung der Formkörper erfolgt dadurch, daß die Nährstoffe, Wirkstoffe, Pflanzenbehandlungsmittel und Hilfsstoffe mit dem Bindemittel gemischt, portioniert und anschließend thermisch oder chemisch gehärtet werden.

EP 0 380 193 A2

## Formkörper zur Ernährung von Pflanzenkulturen und Verfahren zu ihrer Herstellung

Die Erfindung betrifft Formkörper, die alle für die Ernährung von Pflanzenkulturen notwendigen Stoffe in bedarfsangepaßten Mengenverhaltnissen entkält, sowie ein Verfahren zu ihrer Herstellung.

Zur effektiven, aber gleichzeitigen umweltschonenden Nutzung von Düngemitteln wird zunehmend davon Abstand genommen, breitflächig anzuwenden. Es wird vielmehr darauf hingearbeitet, den Dünger in den Nutzungsbereich der Pflanze gezielt abzulegen.

Es ist bereits bekannt, für z.B. Pflanzlochapplikation oder Einzeltopfanwendung entsprechende Düngemittelmengen pulverförmig vorzumischen und mit geeigneten Hilfsstoffen und Pressvorrichtungen in Formkörper gewünschter Größe zu überführen. Produkte dieser Art sind im Handel.

Weiterhin ist bekannt, Nährstoffträger in ihrer Zusammensetzung und ihrem Nährstoffabgabeverhalten so zu modifizieren, daß Düngermischungen entstehen, die dem Bedarf der Pflanze angepaßt sind (DE 3 321 053). Diese Anpassung von Nährstoffzusammensetzung und Nährstoffabgaberate ist von besonderer Bedeutung bei der Zielsetzung, einer Pflanzenkultur eine optimale Ernährung bei stark verminderter Umweltbelastung zukommen zu lassen.

Die Lösungsgeschwindigkeit der Nährstoffe kann u.a. durch Herstellen von Granulaten aus löslichen Nährstoffträgern und anschließender Behandlung der Oberfläche erfolgen. Diese Behandlung wird üblicherweise mit Kunstharzen, Schwefel oder anderen Filmbildnern durchgeführt (z.B. DE 3 544 451).

Die bekannten Applikationsformen für Dünger haben jedoch den Nachteil, daß die Ernährung der Pflanzen aus heterogenen Gemengen nicht in allen Fällen optimal ist. Diese Nachteile zeigen sich besonders dann, wenn diese Gemenge aus Partikeln unterschiedlicher Nährstoffgehalte und unterschiedlicher Korngrößen bestehen.

Aufgabe der Erfindung war es daher, die für die optimale Ernährung einer Einzelpflanze oder Pflanzengruppe notwendige Nährstoffmenge und -zusammensetzung, verbunden mit bedarfsangepaßten Nährstoffabgaberaten in einem Formkörper der Pflanze anzubieten.

Die erfindungsgemäße Aufgabe wird durch einen Formkörpers gelöst, der alle für eine optimale Ernährung von Pflanzenkulturen notwendigen Nährstoffe, Wirkstoffe, Pflanzenbehandlungsmittel und Hilfsstoffe, deren Partikel über Stoffbrücken agglomeriert sind, enthält.

Eine besondere Ausführungsform des erfindungsgemäßen Formkörpers besteht darin, daß mindestens einer der Nährstoffe, Wirkstoffe, Pflanzenbehandlungsmittel und Hilfsstoffe mit einem Kunstharz umhüllt ist und die Stoffbrücken aus einem Bindemittel bestehen.

Die erfindungsgemäß verwendeten Bindemittel sind an sich alle Mittel, die eine Bindung zwischen Korpuskeln gleich welcher Größer herstellen können. Besonders geeignet sind Leime, natürliche oder künstliche Harze, Wachse sowie Schmelzkleber oder Reaktionsharze.

Als Reaktionsharze haben sich insbesondere Epoxide und Polyurethane als geeignet erwiesen.

Die im erfindungsgemäßen Formkörper enthaltenen Nährstoffe sind beispielsweise Stickstoff (N), Phosphor (P), Kalium (K), Magnesium (Mg), Calcium sowie die Spurenelemente Bor, Eisen, Kobalt, Kupfer, Mangan, Molybdän und Zink in ihren zweckentsprechenden chemischen Verbindungen.

Typische Nährstoffkombinationen sind beispielhaft mit bedarfsangepaßten Abgaberaten nachfolgend aufgeführt:

Beispiel A für 4-monatge Kulturzeit

NPK Mg 16-11-14-2

bestehend aus 70 % Rundgranulat, umhüllt

30 % Preßgranulat, nicht umhüllt.

Beispiel B für 8-monatige Kulturzeit

NPK Mg 16-10-12-2

bestehend aus 70 % Rundgranulat, umhüllt

30 % Preßgranulat, nicht umhüllt.

Beispiel C für 4-monatige Kulturzeit

NPK 14-8-14 + 0,038 + 0, 07Cu + 0,1Fe + 0,08Mn + 0,01Mo + 0,02Zn

bestehend aus 95 % Preßgranulat, umhüllt

5 % Spurenelement-Mikrogranulat, nicht umhüllt.

EP 0 380 193 A2

| Abgaberate in | Beispiel | | |
|---|---|---|---|
| | A | B | C |
| % | in Tagen (Wochen) | | |
| 10 | 2 | 2 | 2 |
| 20 | 4 | 4 | 6 (1) |
| 30 | 6 (1) | 6 (1) | 10 |
| 40 | 12 (2) | 18 (3) | 16 (2) |
| 50 | 22 (3) | 42 (6) | 24 (3) |
| 60 | 34 (5) | 70 (10) | 32 (5) |
| 70 | 50 (7) | 106 (15) | 42 (6) |
| 80 | 74 (10) | 148 (20) | 62 (9) |
| 90 | 114 (16) | 224 (30) | 104 (15) |

Unter Wirkstoffen werden verstanden: Wuchsstoffe, Hemmstoffe, Nitrifikationsinhibitoren und Bodenimpfmittel.

Beispielsweise seien genannt Indolylessigsäure, Naphthylessigsäure, Gibberelline, Cytokinine, Keimstimulator KKS (DE 2 625 398), Chlormequat, Chlorphoniumchlorid, Diaminozide, Abscisinsäure, Pydanon, Maleinsäurehydrazid, Isopyrimol, N-Dimethylaminobernsteinsäure, 2-Chlor-6-trichlormethylpyridin, 2-Amino-4-chlor-6-methyl-pyrimidin, Sulfanylaminothiazol, Dicyandiamid und Nitragin.

Als Pflanzenbehandlungsmittel kommen beispielsweise Nematizide oder Bodeninsektizide infrage, wie Mikrogranulate mit den Wirkstoffen Carbofuran, Thiram, Terbufos, Ethoprophos, Bendiocarb und/oder Aldicarb.

Unter Hilfsstoffen im Sinne dieser Erfindung sind solche Stoffe zu verstehen, die die Stabilität der Komponenten garantieren, den Transport und die Verteilung begünstigen und die Festlegung im Boden und in der Pflanze vermeiden.

Beispielsweise genannt seien Chelatbildner auf der Basis der Polyphosphate und Phosphonsäure, Polyamine, Aminoalkohole und Aminopolycarbonsäuren, 2-Hydroxycarbonsäuren sowie Ligninsulfonsäuren; Puffersubstanzen wie Borsäure, Phosphorsäure, Weinsäure, Bernsteinsäure, Citronensäure, Phthalsäure und die Aminonium-, Kalium- und Natriumsalze der vorgenannten Säuren, Glycin, Glycylglycin, Tris-(hydroxymethyl)-aminomethan, N-(Tris-(hydroxymethyl)-methyl)-glycin, Piperazin-1,4-bis)2-ethansulfonsäure) und ihr Natriumsalz oder Imidazol und oberflächenaktive Substanzen wie Alkansulfonate, Olefinsulfonate, Estersulfonate, Alkylsulfonate, insbesondere Alkylbenzolsulfonate vom Typ des Dodecyclbenzolsulfonats und Alkylnaphthalinsulfonate, Alkylsulfate, Ethersulfate, geradkettige und cyclische Ammoniumverbindungen, Benzalkoniumchloride, quartäre Ammoniumsalze, Aminsalze, Pyridiniumsalze, Polyether, insbesondere Alkylphenolpolyglycolether, ethoxylierte Fettsäuren, Fettsäureamide, Fettamine, Fettsäureester von Polyalkoholen, Glycerinderivate mit Betainstruktur oder Sulfobetaine.

Die vergenannten Stoffe können grundsätzlich in verschiedenster körperlicher Form vorliegen, z.B. als Pulver, Kristalle, Prills, Rundgranulate, Pressgranulate oder als sprühgetrocknete Granulate, mit und ohne Konditionierung, mit und ohne abgabebeeinflussende Umhüllung.

Das zur Stoffbrückenbildung verwendete Bindemittel wird in einer Menge von 0,1 bis 30 Gew.-%, vorzugsweise von 0,5 bis 5 Gew.-% eingesetzt.

Falls man als Bindemittel ein Epoxidharz einsetzt, haben sich verschiedene Systeme mit Epoxidäquivalenten von 170 bis 220 und Härter auf Basis von aliphatischen und/oder aromatischen Mono- und Polyaminen mit H-aktiv-Äquivalentmassen von 25 bis 900 oder auf Basis von Polymercaptanen mit H-aktiv-Äquivalentmassen von 160 bis 220 oder auf Basis von Polyaminoamiden mit H-aktiv-Äquivalentmassen von 90 bis 250 und bis zu 10 Masseanteilen Reaktivverdünner aus der Gruppe der Glycidyletherderivate mit Epoxidäquivalenten von 130 bis 360 als geeignet erwiesen. Vorzugsweise wird als Epoxidsystem ein Epoxidharz mit Epoxidäquivalenten von 180 bis 190 gemischt mit Polymercaptanhärtern mit einer H-aktiv-Äquivalentmasse von 200 eingesetzt, das unter Warmluftzufuhr bei einer Lufttemperatur von 20 bis 120 °C, vorzugsweise bei einer Temperatur von 40 bis 60 °C ausgehärtet wird.

Falls man als Bindemittel ein Polyurethan einsetzt, haben sich gleichfalls verschiedene Systeme mit aromatischen und/oder aliphatischen Polyisocyanatkomponenten mit zwei oder mehreren Isocyanatgruppen und Polyesterpolyolen und/oder Polyamiden auf Basis von aliphatischen und/oder aromatischen Grundkörpern als geeignet erwiesen.

Als gut geeignet hat sich das Polyurethansystem auf Basis von 4,4-Diisocyanat-diphenylmethan und

3

Polyolethoxy- und/oder propoxylierte substituierte, tertiäre Mono-, Di-, Tri-Polyole und/oder Polyamine mit einer Hydroxylzahl von 50 bis 500, vornehmlich ein ethoxyliertes Diamin mit einem Molgewicht von 1000 bis 2000 und einer Hydroxylzahl von 120 bis 180, erwiesen. Zur Reaktionsbeschleunigung kann ein Warmluftstrom mit Lufttemperaturen von 20 bis 200 °C, vornehmlich zwischen 40 und 80 °C, eingesetzt werden.

Besonders gut geeignet hat sich ein Polyurethansystem, das aus 4,4-Diisocyanat-diphenylmethan (MDI) und aus einem Benzyletherhydroxylpolyol besteht.

Die Erfindung betrifft desweiteren ein Verfahren zur Herstellung der Formkörper. Hierzu werden die Nährstoffe, Wirkstoffe, Pflanzenbehandlungsmittel und Hilfsstoffe mit dem Bindemittel gemischt, portioniert und anschließend thermisch oder chemisch gehärtet.

Die Proportionierung erfolgt mit Hilfe von Formen, durch Anwendung eines Strangpreßverfahrens kontinuierlich oder durch direkte Anlagerung von Mikrogranulaten an die Oberfläche der Einzelkörner von Makrogranulaten, wobei die Formkörper eine Gewichtsgröße von 0,01-100 g, vornehmlich 0,05 bis 30 g haben.

Die so hergestellten Formkörper sind zur gezielten, bedarfsangepaßten Pflanzenernährung in Form einer einmaligen Applikation in dem Wurzelbereich der jeweiligen Kulturpflanze, vornehmlich für Zierpflanzen, Gemüse, Gehölze, Jungpflanzenanzucht, Aufforstung usw. in Töpfen, Folienschläuchen, Containern, Freilandpflanzlöchern, natürlichen und künstlichen flüssigen und festen Substraten, geeignet.

Die Anwendung der erfindungsgemäßen Formkörper erfolgt durch einmalige Applikationen in Menge, Nährstoffkombination und zeitlichem Abgabeverhalten der Nährstoffe, angepaßt an den Bedarf der Kultur. Typische Aufwandmengen sind beispielhaft in nachfolgender Tabelle aufgeführt:

**Zierpflanzenbau**

Jungpflanzen je nach Nährstoffbedarf 1 bis 3 g/Topf und Liter

Fertigware, je nach Nährstoffbedarf 2 bis 6 g/Topf und Liter

**Baumschulkulturen**

je nach Nährstoffbedarf 2 bis 5 g/Topf und Liter d.h. je 10 l Container 20 bis 50 g **Gemüseanbau**, Jungpflanzenanzucht

1,5 bis 2 g/Topf und Liter **peat-bag-Methode**

4 bis 5 g/l, d.h. z.B. bei Folienschläuchen mit 50 l Volumen 200 bis 250 g und bei 100 l Volumen 400 bis 500 g **Freilandpflanzung**

im Container 30 bis 60 g/10 l

Pflanzlochbevorratung Je nach Nährstoffbedarf 20 bis 50 g/Pflanze **Hydrokultur**

je nach Nährstoffbedarf und bei salzempfindlichen Kulturen 5 g/l

bei Kulturen mit geringer Salzempfindlichkeit 10 bis 20 g/l

Die erfindungsgemäßen Formkörper haben einen Vorteil hinsichtlich der effektiven Nährstoffwirkung bei gleichzeitiger reduzierter Umweltbelastung durch Nährstoffeintrag in das Grundwasser durch die gleichzeitige Anwendung einer gezielten, örtlichen Applikation eines Düngemittels mit der auf den

Pflanzenbedarf abgestimmten Nährstoffabgaberate. Das Dungemittel enthält eine Mischung aller notwendigen Nährstofformen, aller Haupt- und Spurennährstoffe und Nährstofflöslichkeiten, was insbesondere für die Pflanzloch-bzw. Containerapplikation bei Bäumen, Sträuchern, Zierpflanzen und Gemüse wichtig ist.

Die nachfolgenden Beispiele erläutern die erfindungsgemäßen Formkörper und ihre Herstellung, wobei unter "Teilen" Gewichtsteile und unter % Gewichtsprozente zu verstehen sind.

**Beispiel 1**

Düngeragglomerat für Pflanzenlochapplikation bei Bäumen und Gehölzen

700 kg eines 2-4 mm beschichteten Rundganulates der Nährstoffzusammensetzung N-$P_2O_5$-$K_2O$ 14-8-18 mit einer Auflösungszeit von 9 Monaten werden in einem Konusmischer mit 300 kg eines 1-3 mm Pressgranulates der Nährstoffzusammensetzung N-$P_2O_5$-$K_2O$-MgO 21-10-12-7,5 und Spurenelementen 20 min schonend und sorgfältig gemischt. Aus dem Konusmischer wird die Düngemittelmischung über eine Zellradschleuse in einen Paddelschneckenmischer eingetragen. Dort werden 10 kg einer Bindemittelmischung, bestehend aus 50 Teilen einer Polyolkomponente, bestehend aus 30 Teilen Benzyletherharz mit einem Hydroxylgehalt von 16,9 % , 60 Teilen Rizinusöl und 10 Teilen Diacetonalkohol, und 50 Teilen einer Isocyanatkomponente, bestehend aus einem techn. Polyisocyanat auf Basis Diphenylmethandiisocyanat mit einem Isocyanatgehalt von 30-32 % langsam zugegeben und homogen eingemischt. Diese Mischung wird über eine Austragvorrichtung auf eine Formpresse gegeben, mit der das Düngemittelgemisch zu einem Strang geformt wird. Der Strang wird mit einen Schneidedraht schonend in 30 g schwere Agglomerat-Formkörper zerlegt, die in einem Begasungskanal mit Dimethylisopropylamin spontan ausgehärtet werden.

## Beispiel 2

Düngeragglomorat für Topf- und Containerpflanzen

90 Gew.-Teile eines 2,5-5 mm Pressgranulats der Zusammensetzung N-$P_2O_5$-$K_2O$-MgO 22-11-16,5-3 werden in einem Paddelschneckenmischer mit 5 Teilen Bindemittel bestehend aus 50 Teilen eines ethoxylierten Ethylendiamins mit einer Molmasse von 1.400 und 50 Teilen eines Polyisocyanats auf Basis von 4,4-Diisocyanatdiphenylmethan mit einem Isocyanatgehalt von 30-32 % versetzt und homogen verteilt. Anschließend werden 5 Teile eines 0,2-1,0 mm Pressgranulats der Zusammensetzung 2 % B, 4 % Cu, 2 % Fe,4 % Mn, 0,2 % Mo und 1 % Zn zugegeben und homogen eingemischt. Die Mischung wird über eine Formpresse zu einem Strang geformt und mit einem Schneidedraht in 12 g schwere Formkörper-Agglomerate zerlegt. Die Agglomerate werden in einem Wärmetunnel bei 50 bis 60 °C ausgehärtet.

## Beispiel 3

Düngeragglomerat zur Einmischung in Kultursubstrate

90 Gewichtsteile eines beschichteten Rundgranulats einer Korngrößenverteilung von 2 bis 4 mm Durchmesser mit einem Nährstoffgehalt $N_2$-$P_2O_5$-$K_2O$ von 14-14-14 und einer Nährstofffreisetzungszeit von 4 Monaten werden in einer Drehtrommel mit eingebautem Mischwerkzeug mit 5 Gewichtsteilen eines in der Wirbelschicht umhüllten Mikrogranulates einer Korngrößenverteilung von 0,02 bis 0,1 mm, mit einer Wirkstoffzusammensetzung mit den Spurenelementen Bor, Kupfer, Eisen, Mangan, Molybdän und Zink:

| | |
|---|---|
| Borsäure | 3,45 Teile |
| Dinatriumethylendiamintetraessigsäurekupferchelat | 9,05 Teile |
| Dinatriumethylendiamintetraessigsäureeisen(II)-chelat | 14,30 Teile |
| Dinatriumethylendiamintetraessigsäuremanganchelat | 11,45 Teile |
| Ammoniumheptamolybdat | 0,20 Teile |
| Dinatriumethylendiamintetraessigsäurezinkchelat | 2,50 Teile |
| Granulierhilfsstoffe | 51,05 Teile |
| Bindemittel für Beschichtung | 8,00 Teile |

und Hüllsubstanz mit einer Nährstofffreisetzungszeit von 4 Monaten 10 min homogen gemischt. Zur Fixierung der Mischung durch Stoffbrückenbildung werden langsam 5 Gew.-Teile eines Polyol-Isocyanat-Bindemittelgemisches einer wie im Beispiel 1 beschriebenen Zusammensetzung bei rotierender Trommel zugegeben. Die Agglomerate aus Makro- und Mikrogranulaten werden durch Aufsprühen von Dimethylethanolamin spontan ausgehärtet.

70 Gew.-Teile der so hergestellten fixierten Agglomerate werden zu 30 Gew.Teilen eines Preßgranulats mit einer Korngrößenverteilung von 2 bis 4 mm und einer Nährstoffzusammensetzung N-$P_2O_5$-$K_2O$-MgO von 21-4-14-7 gegeben und 10 min in einem Konusmischer gemischt. Das resultierende Mischgranulat hat die Nährstoffzusammensetzung 15-10-13-2 (NPKMg) mit Spurennährstoffen. Es hat eine auf die Jung- und Spätentwicklungsphase der Pflanze für insgesamt 4 Monate abgestimmte Nährstofffreisetzung.

## Beispiel 4

Düngeragglomerat zur Stecklingsbewurzelung

90 Gew.-Teile eine Preßgranulats mit einer Korngrößenverteilung von 2-3 mm, bestehend aus 42 Teilen Ammoniumsulfat mit einem Stickstoffgehalt von 21 %, 35 Teilen Diammoniumphosphat mit einem Stickstoffgehalt von 21 % und einem Phosphorpentoxidgehalt von 53 % und 23 Teilen Kaliumsulfat mit einem Kaliumoxidgehalt von 50 % werden in einer Wirbelschichtapparatur mit 10 Gew.-Teilen eines MDI-Isocyanat/Polyol/Dimethylaminoethanol-Gemisches, welches vor der Eindüsung in die Wirbelschichtapparatur über einen statischen Rohrmischer im Verhältnis 48:48:4 gemischt wird, kontinuierlich beschichtet und ohne Energiezufuhr durchgehärtet.

98 Gew.-Teile des so hergestellten N-K-Granulats mit einer Nährstofffreisetzungszeit von 2-3 Monaten werden mit 2 Gew.-Teilen eines ebenfalls in der Wirbelschicht beschichteten Mikrowirkstoffgranulats mit einer Korngrößenverteilung von 0,05 bis 0,1 mm, bestehend aus 20 Teilen eines MDI-Isocyanat/Polyol/Dimethylethanol-Gemisches und 80 Gew.-Teilen einer Wirkstoffkombination in der Zusammensetzung:

20, 000000 Gew.-Teilen Calciumglycerophosphat

20,000000 Gew.-Teilen Ammoniumphosphat

32,000000 Gew.-Teilen Kaliumnitrat

12,020000 Gew.-Teilen Glucose

12,020000 Gew.-Teilen Sacharose

1,202000 Gew.-Teilen Bernsteinsäure und

0,242000 Gew.-Teilen Zitronensäure

0,242000 Gew.-Teilen Weinsäure

0,242000 Gew.-Teilen Apfelsäure

0,482000 Gew.-Teilen Natriumbenzoat

0,004000 Gew.-Teilen Tyrosin

0,012000 Gew.-Teilen Inosit

0,002000 Gew.-Teilen Ascorbinsäure

0,000024 Gew.-Teilen Thiamin

0,006000 Gew.-Teilen Cystein

0,000036 Gew.-Teilen Kinetin

0,000036 Gew.-Teilen Indolylessigsäure

1,390000 Gew.-Teilen Aluminiumsilikat und

0,135808 Gew.-Teilen Kaliumsulfat

in einer Dragiertrommel mit eingebautem Mischwerkzeugen 10 Minuten homogen gemischt. Zur Agglomerierung des Mikrowerkstoffgranulats auf dem N-P-K-Granulat werden zur Stoffbrückenbildung 5 Teile eines MDI-Isocyanat/Polyol-Gemisches langsam zudosiert, homogen verteilt und durch Begasung mit Dimethylisopropylamin spontan ausgehärtet.

## Beispiel 5

92 Teile eines Mikrogranulats mit einer Korngrößenverteilung von 0,1 bis 0,3 mm und der Zusammensetzung

23.5 Teile Kaliumchlorid

50,5 Teile Kaliumsulfat und

26,0 Teile Kaliumnitrat

werden in einer Wirbelschichtapparatur mit 8 Teilen eines MDI-Isocyanat/Polyol-Gemisches, welches vor der Eindüsung über einen statischen Rohrmischer im Verhältnis 50: 50 gemischt wird, kontinuierlich beschichtet und ausgehärtet, wobei die Wirbelluft im Kreis gefahren wird, zur Härtung 1 Volumenprozent Katalysator Triethylamin enthält und die Beschichtungsrate 0,5 Teile MDI-Isocyanat/Polyol-Gemisch je Minute beträgt.

30,5 Teile des so hergestellten NK-Mikrogranulates mit der Zusammensetzung 3,31 % Stickstoff und 49,83 % Kaliumoxid werden in eine Dragiertrommel gegeben, in der 66,5 Teile Preßgranulat vorgelegt sind mit einer Kornverteilung von 2 bis 4 mm, hergestellt aus

14,40 Teile Diammoniumphosphat

17,70 Teile Harnstoff

46,00 Teile Harnstoffformaldehydkondensat

12,40 Teile Magnesiumphosphat

1,20 Teile Magnesiumoxid

5,80 Teile Phosphorsäure und

2,20 Teile einer Spurenelementmischung,

die sich zusammensetzt aus

21,00 Teile Borsäure

23,50 Teile Kupfersulfat x 5 Hydrat

21,50 Teile Dinatriumethylendiamintetraessigsäureeisen(II)-chelat

1,50 Teile Eisen(II )-sulfat

23,50 Teile Mangatsulfat x 1 Hydrat

7,50 Teile Zinksulfat x 7 Hydrat

1.50 Teile Natriummolybdat x 7 Hydrat.

Die Dragiertrommel enthält gegenläufige Mischblätter zur homogenen Verteilung der Granulate. Nach einer Laufzeit von 10 Minuten werden 3 Teile der im statischen Rohrmischer im Verhältnis 50 : 50 homogenisierten MDI-Isocyanat/Polyol-Mischung über einen Tropfrechen, der die gesamte Fließbettbreite abdeckt, bei rotierender Drehtrommel zudosiert, wobei die Umfangsgeschwindigkeit so geregelt ist, daß während der Dosierung und der anschließenden 5-minütigen Nachmischzeit ein gleichmäßiges Abrollen der Granulate erfolgt. Zur endgültigen Fixierung der NK-Komponente auf dem Preßgranulat wird über das Granulatfließbett ein mit Dimethylisopropylaminkatalysator gesättigter Luftstrom zur spontanen Härtung des Bindemittelgemisches geleitet. Der überschüssige Katalysator wird mit Preßluft entfernt und die ausgehärteten Agglomerate der Drehtrommel entnommen.

## Ansprüche

1. Formkörper enthaltend alle für eine optimale Ernährung von Pflanzenkulturen notwendigen Nährstoffe, Wirkstoffe, Pflanzenbehandlungsmittel und Hilfsstoffe, deren Partikel über Stoffbrücken agglomeriert sind.

2. Formkörper nach Anspruch 1, dadurch gekennzeichnet, daß mindestens einer der Nährstoffe, Wirkstoffe, Pflanzenbehandlungsmittel und Hilfsstoffe mit einem Kunstharz umhüllt ist.

3. Formkörper nach Anspruch 1, dadurch gekennzeichnet, daß die Stoffbrücken aus einem Bindemittel bestehen.

4. Formkörper nach Anspruch 3, dadurch gekennzeichnet, daß das Bindemittel ein Leim, ein natürliches oder künstliches Harz oder Wachs, ein Kontakt oder Schmelzkleber oder ein Reaktionsharz ist.

5. Formkörper nach Anspruch 4, dadurch gekennzeichnet, daß das Reaktionsharz ein Epoxid oder ein Polyurethan ist.

6. Verfahren zur Herstellung von Formkörpern gemäß Anspruch 1, dadurch gekennzeichnet, daß die Nährstoffe, Wirkstoffe, Pflanzenbehandlungsmittel und Hilfsstoffe mit dem Bindemittel gemischt, portioniert und anschließend thermisch oder chemisch gehärtet werden.